# EUROPÄISCHE PATENTSCHRIFT

(11) **EP 2 657 012 B1**
(45) Veröffentlichungstag und Bekanntmachung des Hinweises auf die Patenterteilung: **17.06.2020**
(21) Anmeldenummer: 13165199.4
(22) Anmeldetag: 24.04.2013
(51) Int. Cl.: B32B 17/06, E06B 5/16, E06B 3/02, E06B 3/62

(54) **Zargenfreie Brandschutz-Ganzglastür**
Frame-free fire protection all-glass door
Porte anti-incendie entièrement en verre sans cadre

(30) Priorität: 25.04.2012 DE 202012101540 U
(43) Veröffentlichungstag der Anmeldung: 30.10.2013
(73) Patentinhaber: Holzbau Schmid GmbH & Co. KG, 73099 Adelberg (DE); Etex Building Performance GmbH, 40878 Ratingen (DE)
(72) Erfinder: Wiedemann Günter, 40629 Düsseldorf (DE); Schmid, Claus, 73099 Adelberg (DE)
(74) Vertreter: Weisbrodt, Bernd

(56) Entgegenhaltungen:
- EP-A1- 2 802 724
- WO-A1-2013/104946
- WO-A2-01/07745
- DE-A1- 10 211 940
- DE-A1- 19 901 737
- DE-U1-202011 106 509

## Beschreibung

Die Erfindung betrifft einen Brandschutzabschluss zur Vermeidung des Durchtritts von Feuer und Rauch im Brandfall von einem Raum in einen anderen, wobei der Brandschutzabschluss in eine die beiden Räume verbindende Wandöffnung mit einer Laibung und einem Sturz einsetzbar oder eingesetzt ist und eine Glastür mit zumindest einem profilfreien und in wenigstens eine Richtung verschwenkbar gehaltenen Türflügel aus wenigstens einer Brandschutzscheibe umfasst.

Aus dem Stand der Technik sind verschiedenartige raumtrennende Brandschutzverglasungen bekannt. Die DE 3508078 (A1) beschreibt eine Brandschutzverglasung mit einer Halterung für Brandschutzscheiben, bei der die einzelnen Scheiben durch eine die Stoßkanten der Brandschutzscheibe umgreifende Rahmenkonstruktion gehalten werden. Bei diesem Aufbau wird es teilweise als nachteilig empfunden, dass kein rahmenloser Aufbau für eine Brandschutzverglasung realisiert werden kann. Insbesondere dann, wenn bewegliche Elemente wie Türen oder Fenster in die Verglasung integriert werden sollen, kann die Vielzahl an hierfür einzusetzenden Rahmenteilen das optische Erscheinungsbild beeinträchtigen auch den Lichtdurchtritt verringern.

Das deutsche Gebrauchsmuster DE 29819678(U1) stellt eine Brandschutzverglasung vor, bei der die vertikalen Stoßfugen der Brandschutzscheiben durch ein Dichtungsmittel verfüllt sind. Dieses Brandschutz-Wandelement weist ferner ein Fenster auf, das mittels einer Zarge und einem Rahmen in dem Brandschutz-Wandelement eingebaut ist. Auch bei dieser Lösung kann es als nachteilig empfunden werden, dass verschließbare Öffnungen nicht rahmenlos eingebaut werden können, was den Lichtdurchtritt durch die Verglasung reduziert.

In der europäischen Patentanmeldung EP 0 658 677 A1 wird eine rahmenlose Brandschutzverglasung beschrieben, bei der Brandschutzscheiben an einer freistehenden Stützkonstruktion befestigt werden. Die einzelnen Brandschutzscheiben werden bei dieser Lösung mittels Halterungen fixiert, bei denen auf den beiden Seiten der Brandschutzscheibe korrespondierende Stützplatten vorgesehen sind, die mittels einer durch die Brandschutzscheibe hindurch geführten Verschraubung miteinander verbunden werden und auf diese Weise die dazwischen befindliche Brandschutzscheibe im Klemmsitz halten.

Die DE 20 2011 106 509 U1 offenbart des Weiteren eine Brandschutzverglasung mit den Merkmalen des Oberbegriffs des Anspruchs 1 zur Vermeidung des Durchtritts von Feuer und Rauch im Brandfall von einem Raum in einen anderen mit zumindest zwei aus Brandschutzscheiben bestehenden und nebeneinander angeordneten Glasflächen, von denen eine eine Glastür aufweist, während die weitere Glasfläche ein dazu seitliches Festelement und die auf der gegenüberliegenden Seite an die Glastür angrenzende Fläche ein Anschlagelement bilden, wobei die Glastür profilfrei unmittelbar wenigstens teilweise an dem seitlichen Festelement verschwenkbar gehalten ist.

Eine weitere Brandschutzverglasung ist aus dem europäischen Patent EP 1 566 514 B1 bekannt. Die Brandschutzverglasung weist eine Mehrzahl von nebeneinander angeordneten Grasflächen auf, die an ihrem oberen und/ oder unteren Rand durch ein Holzprofil gehalten sind. Die Glasflächen sind durch profilfrei unmittelbar aufeinandergesetzte Brandschutzscheiben gebildet, wobei benachbarte Brandschutzscheiben sowohl an ihren horizontalen als auch an ihren vertikalen Stoßfugen allein durch ein Dichtungsmittel gehalten sind. Die Verglasung weist zudem in wenigstens einer der Grasflächen eine aus Holzprofilen bestehende Zarge für eine ein- oder mehrflügelige Tür oder ein Fenster auf. Diese Zarge ist an ihren Rändern ausschließlich durch die angrenzenden Brandschutzscheiben gehalten. Eine solche Anordnung ermöglicht bereits einen deutlich verbesserten Lichtdurchtritt im Vergleich zu den vorher beschriebenen Lösungen und ist dabei ausreichend stabil und brandsicher. Dennoch kann selbst bei dieser Anordnung nicht vollständig auf Holzprofile verzichtet werden.

Die **Aufgabe** der vorliegenden Erfindung besteht darin, bei einem Brandschutzabschluss der eingangs genannten Art den Lichtdurchtritt weiter zu steigern. Der Brandschutzabschluss soll dennoch gute Brandschutzeigenschaften und Rauchdichtigkeit sowie ein hohes Maß an Stabilität aufweisen.

Die Aufgabe wird **gelöst** durch einen Brandschutzabschluss zur Vermeidung des Durchtritts von Feuer und Rauch im Brandfall von einem Raum in einen anderen, wobei der Brandschutzabschluss in eine die beiden Räume verbindende Wandöffnung mit einer Laibung und einem Sturz einsetzbar ist und eine Glastür mit zumindest einem profilfreien und in wenigstens eine Richtung verschwenkbar gehaltenen Türflügel aus wenigstens einer Brandschutzscheibe umfasst, wobei der Türflügel an wenigstens einer Längsseite zargenlos an die Laibung der Wandöffnung angrenzen kann, wobei die Brandschutzscheibe zwei mittels eines eine Stoßkante ausbildenden Randverbunds parallel voneinander beabstandete feuerfeste Glasscheiben aufweist, wobei der vom Randverbund eingeschlossene Raum zwischen den feuerfesten Glasscheiben mit einem Brandschutzgel gefüllt ist und der Randverbund der Brandschutzscheibe an zumindest einer Stoßkante unter Ausbildung einer Stoßkantennut nach innen versetzt ist, wobei in die Stoßkantennut ein intumeszierender Streifen eingesetzt ist, dadurch gekennzeichnet, dass in dem intumeszierenden Streifen zumindest eine Dichtungsnut ausgebildet ist, in die eine Dichtung eingesetzt ist.

Mit anderen Worten wird bei dem Brandschutzabschluss vollkommen auf eine Türzarge verzichtet und der Türflügel, oder bei einer zweiflügeligen Brandschutztür die Türflügel, beispielsweise direkt an der Laibung und/oder im Boden befestigt. Da keine die lichten Maße der Wandöffnung verringernde Laibung verwendet wird, zeichnet sich der Brandschutzabschluss nicht nur durch einen besonders hohen Lichtdurchtritt aus, sondern sie wirkt aufgrund der Ganzglasbauweise auch optisch leicht und ansprechend, da man ihr die Brandschutzeigenschaften weniger ansieht als bei den bisher bekannten Lösungen.

Der Brandschutzabschluss kann vorzugsweise insgesamt profilfrei ausgestaltet sein, wodurch der Brandschutzabschluss abgesehen von Scharnieren und einem Schlosskasten völlig aus Glas besteht. Bei der Wand kann es sich beispielsweise um eine Wand aus Beton, Porenbeton, Mauerwerk oder um eine leichte Trennwand handeln, die beispielsweise aus Brandschutzplatten aufgebaut ist.

Oberhalb der Glastür kann wenigstens ein Festelement aus zumindest einer Brandschutzscheibe angeordnet sein. Auf diese Weise können hochgradig lichtdurchlässige Brandschutzeinrichtungen konstruiert werden, welche die Höhe einer üblichen Durchgangstür überschreiten und sich beispielsweise vom Boden bis unter die Decke oder einen unmittelbar unter der Decke vorgesehen Sturz erstrecken.

In bevorzugter Weise ist das Festelement an seinen seitlichen Stoßkanten in eine in der Laibung ausgebildete Nut eingesetzt. Hierdurch ist also auch das Festelement unmittelbar, das heißt ohne Zarge oder eine von außen sichtbare Haltekonstruktion an der Laibung angebracht. Auf diese Weise wird nicht nur der Lichtdurchtritt maximiert, sondern auch eine äußerst belastbare Befestigung erzielt. Es kann ferner vorgesehen sein, dass das Festelement an seiner oberen Stoßkante in eine in dem Sturz ausgebildete Nut eingesetzt ist. Hierdurch wird eine weitere Verbesserung der Befestigung erreicht.

Die Nut kann beispielsweise in die Laibung eingefräst sein. Um eine definierte Nut zu erzeugen, kann in die Nut ein U-Profil aus Metall, insbesondere aus Stahl eingesetzt sein. Dieses U-Profil kann beispielsweise in die Nut gesteckt, eingeklemmt oder darin verklebt werden. Das U-Profil unterbindet zudem einen direkten Kontakt zwischen den empfindlichen Brandschutzscheiben und dem Mauerwerk.

Damit sich die Brandschutzscheibe(n) des Festelements leicht montieren lassen ist es zweckmäßig, wenn das Festelement eine größere Breite als die lichte Breite der Wandöffnung aufweist, wobei die Tiefe der Nut an zumindest einer Längsseite der Laibung derart gewählt ist, dass sie wenigstens der Differenz zwischen der Breite des Festelements und der lichten Weite der Wandöffnung beträgt. Ist ein U-Profil in die Nut eingesetzt, ist dabei anstelle der Nuttiefe die Tiefe des U-Profils heranzuziehen. Bei der Montage kann dann das Festelement zunächst in die erste Nut bis zum Nutboden eingeschoben werden, danach in den Bereich der gegenüberliegenden Nut verschwenkt und in die zweite Nut eingeschoben werden, so dass die Stoßkanten der Brandschutzscheibe in beide gegenüber liegenden Nuten hineinragen.

Die Brandschutzscheibe kann an ihren in die Nut eingesetzten Randbereichen oberflächlich mit Dichtstreifen versehen sein, die im eingebauten Zustand an den Seitenwänden der Nut beziehungsweise des U-Profils anliegen. Die Dichtstreifen dienen der besseren Abdichtung sowie auch der mechanischen Dämpfung der Brandschutzscheibe. Der Spalt zwischen der Brandschutzscheibe und der Nut beziehungsweise dem U-Profil kann nach dem Einbau zudem mit einer Fugendichtmasse, insbesondere einer feuerfesten oder intumeszierenden Fugendichtmasse versiegelt werden.

Erfindungsgemäß handelt es sich bei den eingesetzten Brandschutzscheiben um solche, die zwei mittels eines Randverbunds parallel voneinander beabstandete feuerfeste Glasscheiben aufweisen. Der vom Randverbund eingeschlossene Raum zwischen den feuerfesten Glasscheiben ist insbesondere mit einem Brandschutzgel gefüllt.

Brandschutzscheiben der vorgenannten Art sind im Prinzip bekannt. Für solche Brandschutzscheiben kommen sämtliche Arten von Glasscheiben in Frage. Vorzugsweise besteht jedoch zumindest eine der Glasscheiben aus Sicherheitsglas, insbesondere aus Einscheibensicherheitsglas oder Verbundsicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor dem direkten Flammenkontakt schützen. Da Einscheibensicherheitsglas nach dem Vorspannen nicht mehr geschnitten werden kann, müssen die Aussparungen für die Anbringung von Scharnieren, Schlössern und dergleichen bereits vor dem Vorspannen in den Glasscheiben vorgesehen werden. Es lassen sich jedoch ebenso andere Glasscheiben verwenden, wie Floatglas.

Die Glasscheiben können unabhängig voneinander eine Scheibendicke von 3 bis 20 mm aufweisen, bevorzugt 5 bis 10 mm. Der Abstand der Glasscheiben kann vorzugsweise im Bereich von 5 bis 50 mm liegen. Besonders bevorzugt beträgt der Abstand der Glasscheiben voneinander etwa 8 bis 28 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

Der Raum zwischen den Glasscheiben ist bei gelgefüllten Brandschutzscheiben mit einem besonderen Brandschutzgel gefüllt. Mit Brandschutzgel bzw. Hydrogel gefüllte Brandschutzscheiben sind beispielsweise in der EP 1 820 931 A1 und in der DE 10 2005 018 842 A1 beschrieben. Diese Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse erreichen können. Das bedeutet nicht nur einen einfacheren Transport der Scheiben, sondern auch, dass die Scharniere wegen der geringeren Last leichter ausgelegt werden können beziehungsweise weniger stark belastet werden.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen bevorzugt aus zwei parallel beabstandeten Glasscheiben aus Einscheibensicherheitsglas (ESG), die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die eingesetzten Brandschutzgele können auch Additive beinhalten wie Silikate, UV-Schutzmittel oder auch Farbstoffe.

Erfindungsgemäß ist der Randverbund der Brandschutzscheibe an zumindest einer Stoßkante unter Ausbildung einer Stoßkantennut nach innen versetzt, insbesondere um wenigstens 4 mm, vorzugsweise wenigstens 15 mm. Diese Anordnung kann auch an zwei, drei oder auch allen umlaufenden Stoßkanten der Brandschutzscheibe verwendet werden. Hierdurch ist es möglich, in der durch das nach innen Versetzen des Randverbunds geschaffenen Stoßkantennut weitere, den Brandschutz verbessernde Elemente und/ oder Dichtelemente unterzubringen. Dies wirkt sich vorteilhaft auf die Rauch- und Flammdichtigkeit im Bereich der Glastür aus.

Erfindungsgemäß ist in die in die Stoßkantennut ein intumeszierender Streifen eingesetzt. Auf diese Weise wird eine zuverlässige Brandschutzabdichtung geschaffen, denn im Brandfall schäumt das intumeszierende Material auf und dichtet auf diese Weise den Zwischenraum zwischen der Glasscheibe und dem benachbarten Element ab, sei es ein weiteres Glaselement oder die Laibung. Dadurch wird der Durchtritt von Rauch und Feuer wirksam über einen längeren Zeitraum unterbunden. Dabei ist es besonders bevorzugt, wenn der nach innen versetzte Randverbund bei der Brandschutzscheibe des Türflügels an sämtlichen Stoßkanten vorgesehen ist.

In dem intumeszierenden Streifen ist außerdem zumindest eine Dichtungsnut ausgebildet, in die eine Dichtung eingesetzt ist, insbesondere eine Lippendichtung. Vorzugsweise ist beiderseits des intumeszierenden Streifens jeweils eine Dichtung vorgesehen. Die Dichtung kann beispielsweise aus Gummi oder Silikon bestehen und über Federhaken verfügen, mit denen diese in der Dichtungsnut gehalten ist. Eine solche Anordnung bietet den Vorteil, dass eine Dichtung zu einer Verbesserung der Rauchabdichtung beiträgt, insbesondere zu Beginn eines sich ausbreitenden Brandes. Denn zu diesem Zeitpunkt ist häufig die Auslösetemperatur des intumesziernenden Materials noch nicht erreicht. Gleichzeitig dämpft die Dichtung auch die Glastür beim Schließvorgang. Bei Fortschreiten des Brandes und der damit einhergehenden Temperatur verbrennt die Dichtung, wobei dann der intumeszierende Streifen bereits aufgeschäumt ist und die Abdichtungsfunktion übernimmt.

Die Glastür kann als Pendeltür oder als Anschlagtür sowie ein- oder auch zweiflügelig ausgebildet sein. Bei einflügeliger Ausgestaltung der Glastür kann der Türflügel über ein oder mehrere Scharniere unmittelbar an der Laibung, dem Sturz, dem Festelement und/oder dem Boden verschwenkbar gehalten sein. Im Falle einer zweiflügeligen Glastür können beide Türflügel jeweils über ein oder mehrere Scharniere unmittelbar an der Laibung, dem Sturz, dem Festelement und/oder dem Boden verschwenkbar gehalten sein.

Als Scharniere sind Scharnierbänder besonders geeignet. Diese bestehen in der Regel aus mehreren Elementen, nämlich zwei Scharnierelementen, die mittels eines Drehlagers miteinander verbunden sind, sowie zwei Befestigungsplatten, die auf der gegenüberliegenden Außenfläche angebracht werden. Die Scharnierelemente werden dabei in der Regel über Schrauben oder Bolzen mit den jeweiligen Befestigungsplatten fixiert, wodurch die Brandschutzscheibe im Klemmsitz gehalten ist.

Bei gelgefüllten Brandschutzscheiben sind hierfür bereits bei deren Herstellung entsprechende Durchführungen vorzusehen. Diese werden zweckmäßigerweise durch im Inneren der Brandschutzscheiben angebrachte Abstandhalter verstärkt, da gelgefüllte Brandschutzscheiben empfindlich gegenüber einer durch den Klemmsitz hervorgerufenen Druckbeanspruchung sind. Solche Abstandhalter sind beispielsweise in den deutschen Gebrauchsmustern DE 20 2011 100 310.1 und DE 20 2011 100 312.8 beschrieben, deren Inhalt vollumfänglich in die vorliegende Anmeldung einbezogen wird.

Um die Glastür im geschlossenen Zustand arretieren zu können, kann der Türflügel an seiner der Laibung abgewandten Längsseite einen Schlosskasten mit einer Schlossfalle aufweisen, wobei der Schlosskasten insbesondere in eine Ausnehmung des Türflügels eingesetzt ist. Alternativ hierzu kann der Schlosskasten auch auf den Türflügel aufgesetzt sein. Der Schlosskasten ist zweckmä-ßigerweise aus Metall gefertigt, wobei im Inneren des Schlosskastens Dämmstreifen aus einem silikatischen Material vorgesehen sein können, sofern die Schließmimik dies zulässt. Wenn der Schlosskasten aufgesetzt ist, ist diese Maßnahme nicht erforderlich, da die Brandschutzscheibe die Isolationsfunktion erfüllt. Dabei kann es jedoch sinnvoll sein, Dämmstreifen zumindest im Bereich der Durchführungen durch die Brandschutzscheibe vorzusehen, beispielsweise im Bereich der Durchführung für einen Türdrücker.

Ist die Glastür einflügelig ausgebildet kann an der dem Schlosskasten zugewandten Laibung in der Höhe des Schlosskastens eine mit der Schlossfalle korrespondierende Rasteinrichtung vorgesehen sein, wobei die Rasteinrichtung insbesondere in einer Ausnehmung der Laibung untergebracht ist. Dies ist besonders vorteilhaft, weil eine solche Rasteirichtung in der Draufsicht auf die geschlossene Tür betrachtet nicht erkennbar ist und deshalb auch der Lichtdurchtritt durch die Brandschutzverglasung nicht verringert.

Bei einer zweiflügeligen Ausgestaltung der Glastür kann der nicht mit einem Schlosskasten versehene zweite Türflügel an seiner dem ersten Türflügel zugewandten Seite einen in der Höhe des Schlosskastens angebrachten Anschlagkasten aufweisen, der über eine mit der Schlossfalle korrespondierende Rasteinrichtung verfügt. Der Anschlagkasten kann beispielsweise in eine Ausnehmung des zweiten Türflügels eingesetzt oder auch auf den zweiten Türflügel aufgesetzt sein, wobei zweckmäßigerweise dieselbe Positionierung wie beim Schlosskasten verwendet wird.

Werden der Schlosskasten und der Anschlagkasten auf die Türflügel aufgesetzt, werden diese typischerweise mittels durch die jeweiligen Brandschutzscheiben geführte Schrauben oder Bolzen mit einer auf der Gegenseite angebrachten Befestigungsplatte fixiert. Dabei werden die Brandschutzscheiben, wie bereits oben bei den Ausführungen zu den Scharnieren erörtert, eingeklemmt. Wegen der oben genannten Gründe bietet es sich deshalb auch hier an, die Brandschutzscheiben im Bereich der Durchführungen von Schloss- beziehungsweise Anschlagkasten durch im Inneren der Brandschutzscheiben angebrachte Abstandhalter zu verstärken, wie sie in den deutschen Gebrauchsmustern DE 20 2011 100 310.1 und DE 20 2011 100 312.8 beschrieben sind.

Zur Verbesserung der Dichtigkeit der Glastür kann deren untere Stoßkante mit einer Bodendichtung versehen sein.

Die Brandschutzverglasung wird im Folgenden anhand der Figuren 1 bis 9 näher beschrieben, von denen die Figuren 1, 2, und 4 bis 9 nicht beanspruchte Ausführungsformen betreffen. Dabei zeigen
- Fig. 1: eine Brandschutzverglasung in der Draufsicht;
- Fig. 2: eine ausschnittsweise Vergrößerung eines Bereichs entlang der vertikalen Schnittlinie V1 gemäß Fig. 1;
- Fig. 3: eine ausschnittsweise Vergrößerung eines Bereichs entlang der vertikalen Schnittlinie V2 gemäß Fig. 1;
- Fig. 4: eine ausschnittsweise Vergrößerung eines Bereichs entlang der vertikalen Schnittlinie V3 gemäß Fig. 1;
- Fig. 5: eine ausschnittsweise Vergrößerung eines Bereichs entlang der vertikalen Schnittlinie V4 gemäß Fig. 1;
- Fig. 6: eine ausschnittsweise Vergrößerung eines Bereichs entlang der vertikalen Schnittlinie V5 gemäß Fig. 1;
- Fig. 7: eine ausschnittsweise Vergrößerung eines Bereichs entlang der horizontalen Schnittlinie H1 gemäß Fig. 1; sowie
- Fig. 8: eine ausschnittsweise Vergrößerung eines Bereichs entlang der horizontalen Schnittlinie H2 gemäß Fig. 1; sowie
- Fig. 9: eine ausschnittsweise Vergrößerung eines Bereichs entlang der horizontalen Schnittlinie H3 gemäß Fig. 1; sowie

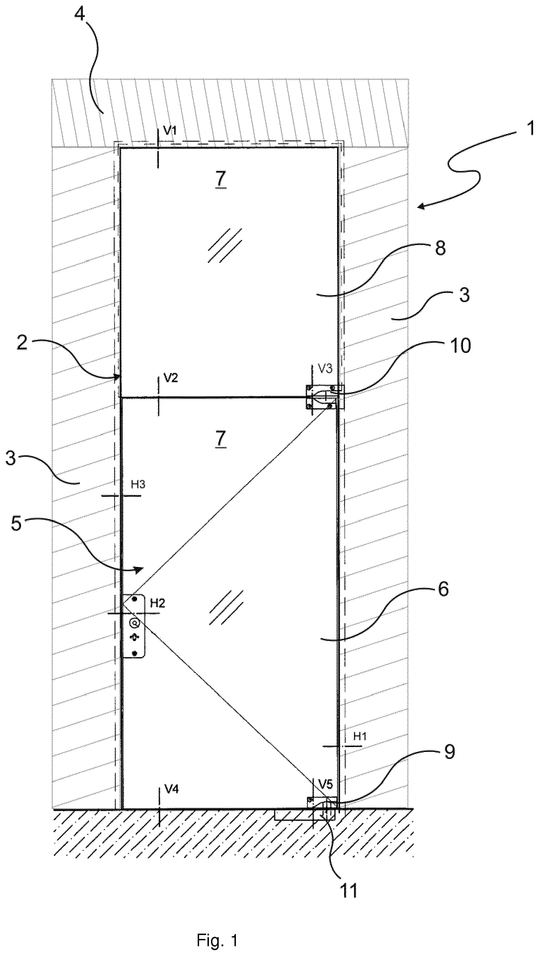

In Fig. 1 ist ein Brandschutzabschluss 1 zur Vermeidung des Durchtritts von Feuer und Rauch im Brandfall von einem Raum in einen anderen dargestellt, wobei der Brandschutzabschluss 1 in eine die beiden Räume verbindende Wandöffnung 2 mit einer Laibung 3 und einem Sturz 4 eingesetzt ist. Der Brandschutzabschluss 1 umfasst eine Glastür 5 mit zumindest einem profilfreien und in eine Richtung verschwenkbar gehaltenen Türflügel 6. Der Türflügel 6 besteht aus einer durchgehenden Brandschutzscheibe 7 und grenzt an seinen beiden Längsseiten zargenlos an die Laibung 3 der Wandöffnung 2 an.

Oberhalb der Glastür 5 ist ein Festelement 8 angeordnet, dass ebenfalls aus einer durchgehenden Brandschutzscheibe 7 besteht. Das Festelement grenzt zargenlos und unmittelbar an die Laibung 3 und den Sturz 4 an.

Die Glastür 5 ist als Anschlagtür ausgebildet, wobei der Türflügel 6 mittels zweier Scharnierbänder 9, 10 verschwenkbar gehalten ist. Das untere Scharnierband 9 ist mit einem Bodentürschließer 11 verbunden, wohingegen das obere Scharnierband 10 an dem Festelement 5 und der Laibung 3 ansetzt.

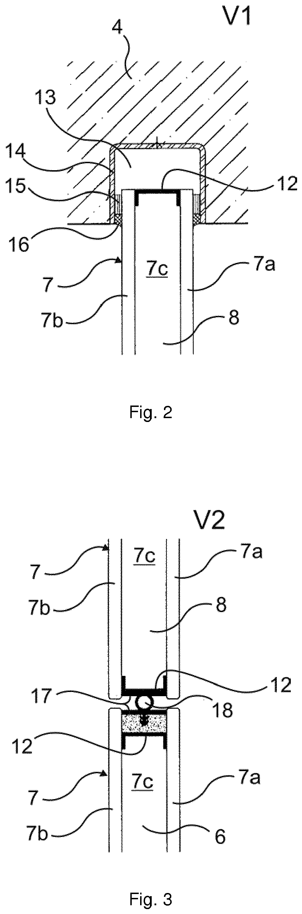

In Fig. 2 ist die Brandschutzverglasung 1 entlang des Vertikalschnitts V1 dargestellt. Die Brandschutzscheibe 7 des Festelements 8 besteht aus zwei parallel zueinander mittels eines Randverbunds 12 aus Polyurethan beabstandeten Glasscheiben 7a, 7b aus feuerfestem Einscheibensicherheitsglas. Der von den Glasscheiben 7a, 7b und dem Randverbund 12 eingeschlossene Raum ist mit einem Brandschutzgel 7c gefüllt. Die Glasscheiben 7a, 7b sind jeweils 8 mm stark wobei der Abstand der Innenflächen voneinander 28 mm beträgt. Die Dicke der Brandschutzscheibe 7 beträgt 44 mm von Außenfläche zu Außenfläche gemessen, kann aber auch geringer bis zu einer Dicke von 27 mm sein.

Das Brandschutzgel 7c wird beispielsweise als Hydrogel aus einer NaCl/MgCl₂ Salzlösung unter Zugabe polymerisierbarer Verbindungen wie einer Mischung aus Acrylamid, N-Methylolacrylamid, Methylenbisarcylamid und einem Polymerisationsbeschleuniger in Wasser entweder vor dem Einfüllen zwischen die Glasscheiben 7a, 7b hergestellt oder in-situ zwischen den Glasscheiben 7a, 7b erzeugt, indem die oben genannten Komponenten miteinander vermischt und direkt in den Hohlraum zwischen die Glasscheiben 7a, 7b eingefüllt werden. Die Polymerisation zum Hydrogel erfolgt dann im nun mit der Mischung ausgefüllten Hohlraum zwischen den Glasscheiben 7a, 7b.

In dem Sturz 4 ist eine Nut 13 ausgebildet, in die ein U-Profil 14 aus Stahl eingesetzt ist. In das U-Profil 14 ist der obere Rand der Brandschutzscheibe 7 des Festelements 8 eingeschoben. Zwischen den Glasscheiben 7a, 7b und dem U-Profil 14 sind Dichtungsstreifen 15 aus Gummi oder Silikon eingesetzt, wobei die Fugen zwischen den Glasscheiben 7a, 7b und dem U-Profil 14 außen zusätzlich mit einer Fugendichtmasse 16 versiegelt sind.

Fig. 3 zeigt die Brandschutzverglasung 1 entlang des Vertikalschnitts V2. Darin ist zu erkennen, dass die Brandschutzscheibe 7 des Türflügels 6 an ihrer Oberkante sowie auch die Brandschutzscheibe 7 des Festelements 8 an ihrer Unterkante jeweils auf dem Randverbund 12 mit einem Dichtstreifen 17 aus intumeszierendem Material versehen sind. In der oberen Stoßkante des Türflügels 6 ist zudem eine Dichtung 18 in Form einer Lippendichtung angebracht, welche den Raum zwischen dem Türflügel 6 und dem Festelement 8 abdichtet. Die Lippendichtung 18 verfügt über eine mit Federhaken bewehrte Feder, mit der sie in eine im Randverbund 12 ausgebildete Nut eingesetzt ist.

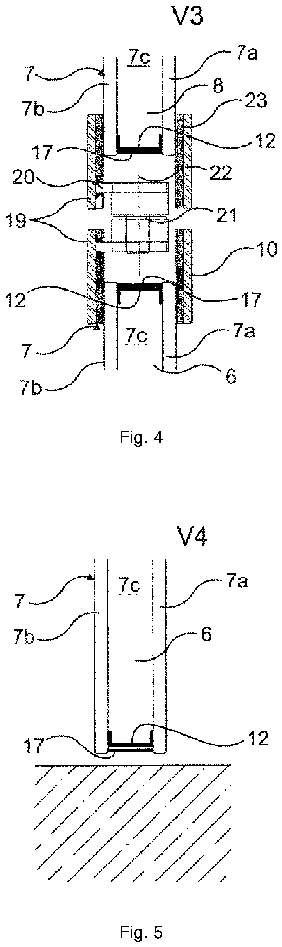

Fig. 4 verdeutlicht den Aufbau der Brandschutzverglasung 1 entlang des Vertikalschnitts V3, also den Bereich des oberen Scharnierbandes 10. Das Scharnierband 10 ist aus Halteplatten 19 aus Stahl und einem daran angeschweißten Zapfenband 20 aufgebaut, welches über ein Drehlager 21 ein Verschwenken des Türflügels 6 gegenüber dem Festelement 8 entlang der Schwenkachse 22 ermöglicht. Die Halteplatten 10 sind beidseitig der jeweiligen Brandschutzscheibe 7 positioniert und werden mittels durch die Brandschutzscheibe 7 hindurchgeführten, hier nicht dargestellten Schrauben gegeneinander verspannt, so dass die dazwischen befindliche Brandschutzscheibe 7 im Klemmsitz gehalten wird. Zwischen den Außenflächen der Glasscheiben 7a, 7b und den Halteplatten 19 sind Dämmstreifen 23 aus Gummi platziert.

Der in Fig. 5 gezeigte Vertikalschnitt V4 zeigt die Unterkante des Türflügels 6 im Bereich der schraffiert dargestellten Fußbodenoberkante. Der unterhalb des Türflügels 6 vorgesehene Streifen 17 aus intumeszierendem Material verschließt im Brandfall den Spalt zwischen dem Türflügel 6 und der Fußbodenoberkante.

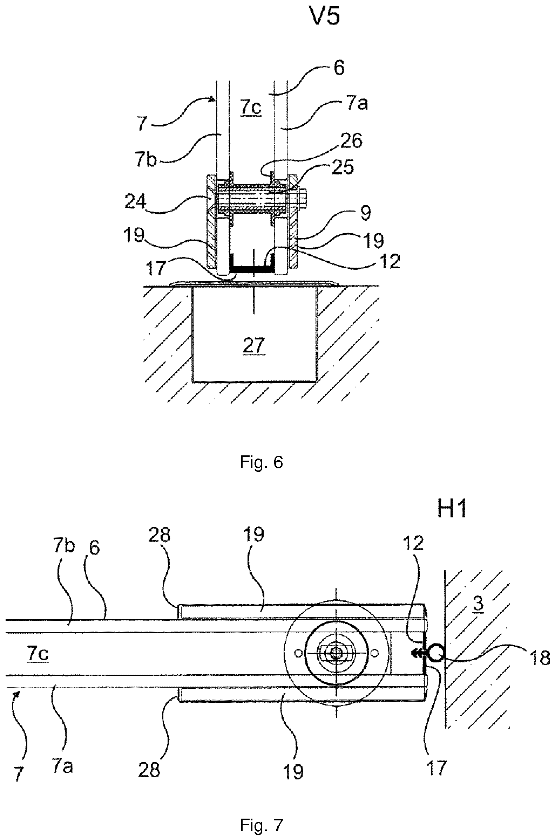

In Fig. 6 ist der Bereich des unteren Türscharniers 9 in Form des Vertikalschnitts V5 dargestellt. Beidseitig des Türflügels 6 sind Halteplatten 19 vorgesehen, die über eine durch die Brandschutzscheibe 7 hindurchgeführte Schraube 24 gegeneinander verspannt sind, so dass die dazwischen befindliche Brandschutzscheibe 7 des Türflügels 6 im Klemmsitz gehalten wird.

Damit die Brandschutzscheibe 7 durch das Verspannen nicht verformt wird, ist zwischen den Glasscheiben 7a, 7b ein Abstandhalter 25 aus Kunststoff angeordnet. Durch dessen zentrale Öffnung ist die Schraube 24 hindurchgeführt, wobei der Abstandhalter 25 über Anschlagflächen 26 verfügt, an denen die Glasscheiben 7a, 7b abgestützt sind. Unterhalb des Türscharniers 9 ist ein Zementkasten 27 angeordnet, in welchem sich die Schließmimik des Bodentürschließers befindet, wie beispielsweise ein mechanischer oder elektromechanischer Türschließer.

Fig. 7 zeigt den Bereich des unteren Türscharniers 9 nochmals in der horizontalen Schnittansicht H1 von oben. In dieser Ansicht ist zu erkennen, dass in dem Randverbund 12 eine Dichtung 18 vorgesehen ist, welche den Spalt zwischen dem Türflügel 6 und der Laibung 3 abdichtet. Zudem zeigt die Abbildung, dass die Halteplatten 19 mit Abdeckungen 28 aus Edelstahl zur optischen Verschönerung versehen sind.

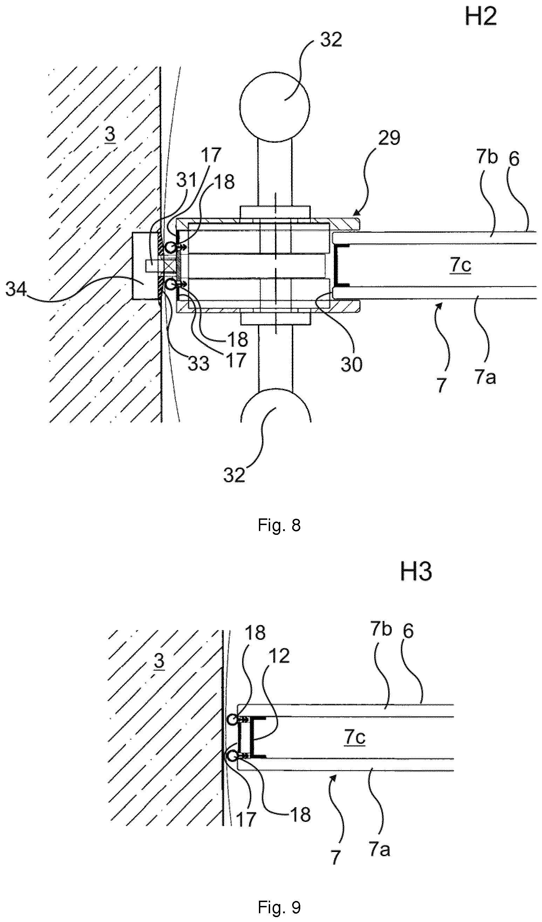

In Fig. 8 ist die Brandschutzverglasung 1 im Horizontalschnitt entlang der Linie H2 dargestellt. Der Türflügel 6 ist mit einem Schlosskasten 29 ausgerüstet, der in eine Ausnehmung 30 des Türflügels 6 eingesetzt ist. Der Schlosskasten 29 verfügt über eine innenliegende Schließmimik, mit der eine Schlossfalle 31 über beidseitig des Schlosskastens 29 angeordnete Türdrücker 32 betätigt werden kann. Die Schlossfalle 31 korrespondiert mit einer Rasteinrichtung 33 in Form eines Schließblechs, in welche die Schlossfalle 31 zur Arretierung des Türflügels 6 einrasten kann. Das Schließblech 33 erstreckt sich über eine Ausnehmung 34 in der Laibung 3. An beiden vertikalen Längsseiten der Schlossfalle 31 sind jeweils ein Streifen 17 aus intumeszierendem Material sowie eine Dichtung 18 angeordnet.

Fig. 9 zeigt einen weiteren Horizontalschnitt H3 oberhalb des in Fig. 8 dargestellten Ausschnitts. Die Brandschutzscheibe 7 ist an ihrer, der Laibung 3 zugewandten Seite mit zwei parallel voneinander beabstandeten Dichtungen 18 versehen, zwischen denen ein Streifen 17 aus intumeszierendem Material angeordnet ist.

### Bezugszeichenliste

- 1: Brandschutzabschluss
- 2: Wandöffnung
- 3: Laibung
- 4: Sturz
- 5: Glastür
- 6: Türflügel
- 7: Brandschutzscheibe
- 7a, b: Glasscheiben
- 7: Brandschutzgel
- 8: Festelement
- 9: unteres Scharnierband
- 10: oberes Scharnierband
- 11: Bodentürschließer
- 12: Randverbund
- 13: Nut
- 14: U-Profil
- 15: Dichtungsstreifen
- 16: Fugendichtmasse
- 17: intumeszierender Dichtstreifen
- 18: Dichtung
- 19: Halteplatte
- 20: Zapfenband
- 21: Drehlager
- 22: Schwenkachse
- 23: Dämmstreifen
- 24: Schraube
- 25: Abstandhalter
- 26: Anschlagfläche
- 27: Zementkasten
- 28: Abdeckung
- 29: Schlosskasten
- 30: Ausnehmung
- 31: Schlossfalle
- 32: Türdrücker
- 33: Schließblech
- 34: Ausnehmung

## Patentansprüche

1. Brandschutzabschluss (1) zur Vermeidung des Durchtritts von Feuer und Rauch im Brandfall von einem Raum in einen anderen, wobei der Brandschutzabschluss in eine die beiden Räume verbindende Wandöffnung (2) mit einer Laibung (3) und einem Sturz (4) einsetzbar ist und eine Glastür (5) mit zumindest einem profilfreien und in wenigstens eine Richtung verschwenkbar gehaltenen Türflügel (6) aus wenigstens einer Brandschutzscheibe (7) umfasst, wobei der Türflügel (6) an wenigstens einer Längsseite zargenlos an die Laibung (3) der Wandöffnung (2) angrenzen kann, wobei die Brandschutzscheibe (7) zwei mittels eines eine Stoßkante ausbildenden Randverbunds (12) parallel voneinander beabstandete feuerfeste Glasscheiben (7a, 7b) aufweist, wobei der vom Randverbund (12) eingeschlossene Raum zwischen den feuerfesten Glasscheiben (7a, 7b) mit einem Brandschutzgel (7c) gefüllt ist und der Randverbund (12) der Brandschutzscheibe (7) an zumindest einer Stoßkante unter Ausbildung einer Stoßkantennut nach innen versetzt ist, wobei in die Stoßkantennut ein intumeszierender Streifen (17) eingesetzt ist,
**dadurch gekennzeichnet, dass**
in dem intumeszierenden Streifen (17) zumindest eine Dichtungsnut ausgebildet ist, in die eine Dichtung (18) eingesetzt ist.

2. Brandschutzabschluss (1) nach Anspruch 1, **dadurch gekennzeichnet, dass** der Brandschutzabschluss (1) insgesamt profilfrei ist.

3. Brandschutzabschluss (1) nach Anspruch 1 oder 2, **dadurch gekennzeichnet, dass** oberhalb der Glastür (6) wenigstens ein Festelement (8) aus zumindest einer Brandschutzscheibe (7) angeordnet ist.

4. Brandschutzabschluss (1) nach Anspruch 3, **dadurch gekennzeichnet, dass** das Festelement (8) an seinen seitlichen Stoßkanten in eine in der Laibung (3) ausgebildete Nut (13) eingesetzt ist.

5. Brandschutzabschluss (1) nach Anspruch 3 oder 4, **dadurch gekennzeichnet, dass** das Festelement (8) an seiner oberen Stoßkante in eine in dem Sturz (4) ausgebildete Nut (13) eingesetzt ist.

6. Brandschutzabschluss (1) nach Anspruch 5, **dadurch gekennzeichnet, dass** in die Nut (13) ein U-Profil (14) aus Metall, insbesondere aus Stahl eingesetzt ist.

7. Brandschutzabschluss (1) nach Anspruch 5 oder 6, **dadurch gekennzeichnet, dass** das Festelement (8) eine größere Breite als die lichte Breite der Wandöffnung (2) aufweist, wobei die Tiefe der Nut (13) an zumindest einer Längsseite der Laibung (3) derart gewählt ist, dass sie wenigstens der Differenz zwischen der Breite des Festelements (8) und der lichten Weite der Wandöffnung (2) beträgt.

8. Brandschutzabschluss (1) nach einem der vorstehenden Ansprüche, **dadurch gekennzeichnet, dass** die Glastür (5) als Pendeltür oder als Anschlagtür ausgebildet ist.

9. Brandschutzabschluss (1) nach einem der vorstehenden Ansprüche, **dadurch gekennzeichnet, dass** die Glastür (5) einflügelig ausgebildet ist, wobei der Türflügel (6) über ein oder mehrere Scharniere (9, 10) unmittelbar an der Laibung (3), dem Sturz (4), dem Festelement (8) und/oder dem Boden verschwenkbar gehalten ist.

10. Brandschutzabschluss (1) nach einem der Ansprüche 1 bis 8, **dadurch gekennzeichnet, dass** die Glastür (5) zweiflügelig ausgebildet ist, wobei beide Türflügel (6) jeweils über ein oder mehrere Scharniere (9, 10) unmittelbar an der Laibung (3), dem Sturz (4), dem Festelement (8) und/oder dem Boden verschwenkbar gehalten sind.

11. Brandschutzabschluss (1) nach einem der Ansprüche 1 bis 10, **dadurch gekennzeichnet, dass** der Randverbund (12) unter Ausbildung der Stoßkantennut um wenigstens 4 mm, vorzugsweise um wenigstens 15 mm, nach innen versetzt ist.

12. Brandschutzabschluss (1) nach einem der Ansprüche 1 bis 11, **dadurch gekennzeichnet, dass** die Stoßkantennut an allen Stoßkanten der Brandschutzscheibe (7) des Türflügels (6) ausgebildet ist.

13. Brandschutzabschluss (1) nach einem der Ansprüche 1 bis 12, **dadurch gekennzeichnet, dass** ferner zwischen dem intumeszierenden Streifen (17) und den feuerfesten Glasscheiben (7a, 7b) zumindest eine Dichtungsnut ausgebildet ist, in die eine Dichtung (18) eingesetzt ist.

14. Brandschutzabschluss (1) nach einem der Ansprüche 1 bis 13, **dadurch gekennzeichnet, dass** zwischen die in die Dichtungsnut eingesetzte Dichtung (18) eine Lippendichtung ist.

15. Brandschutzabschluss (1) nach einem der Ansprüche 1 bis 14, **dadurch gekennzeichnet, dass** die Dichtung (18) über Federhaken verfügt, mit denen diese in der Dichtungsnut gehalten ist.

16. Brandschutzabschluss (1) nach einem der vorstehenden Ansprüche, **dadurch gekennzeichnet, dass** der Türflügel (6) an seiner der Laibung (3) abgewandten Längsseite einen Schlosskasten (29) mit einer Schlossfalle (31) aufweist, wobei der Schlosskasten (29) insbesondere in eine Ausnehmung (30) des Türflügels (6) eingesetzt ist.

17. Brandschutzabschluss (1) nach Anspruch 16, **dadurch gekennzeichnet, dass** die Glastür (5) einflügelig ausgebildet ist und dass an der dem Schlosskasten (29) zugewandten Laibung (3) in der Höhe des Schlosskastens (29) eine mit der Schlossfalle (31) korrespondierende Rasteinrichtung (33) vorgesehen ist, wobei die Rasteinrichtung (33) insbesondere in einer Ausnehmung (34) der Laibung (3) untergebracht ist.

18. Brandschutzabschluss (1) nach Anspruch 16, **dadurch gekennzeichnet, dass** die Glastür (5) zweiflügelig ausgebildet ist und dass der nicht mit einem Schlosskasten (29) versehene zweite Türflügel an seiner dem ersten Türflügel (6) zugewandten Seite einen in der Höhe des Schlosskastens (29) angebrachten Anschlagkasten aufweist, der über eine mit der Schlossfalle (29) korrespondierende Rasteinrichtung verfügt, wobei der Anschlagkasten insbesondere in eine Ausnehmung des zweiten Türflügels eingesetzt ist.

19. Brandschutzabschluss (1) nach einem der vorstehenden Ansprüche, **dadurch gekennzeichnet, dass** die untere Stoßkante des Türflügels (6) mit einer Bodendichtung versehen ist.

## Claims

1. A fire protection closure (1) for preventing fire and smoke from penetrating from one room into another in case of fire, wherein the fire protection closure can be inserted into a wall opening (2) having a reveal (3) and a lintel (4), the wall opening connecting the two rooms and the fire protection closure comprising a glass door (5) with at least one profile-free door leaf (6) made of at least one fire protection pane (7), which door leaf is held in a pivoting manner into at least one direction, wherein at least one longitudinal side of the door leaf (6) can be adjacent without any frame to the reveal (3) of the wall opening (2), wherein the fire protection pane (7) comprises two fireproof glass panes (7a, 7b) which are spaced apart in parallel from each other by means of an edging compound (12) that forms an abutting edge, wherein the space enclosed by the edging compound (12) between the fireproof glass panes (7a, 7b) is filled with a fire protection gel (7c) and the edging compound (12) of the fire protection pane (7) is offset inwards on at least one abutting edge while forming an abutting edge groove, wherein an intumescent strip (17) is inserted into the abutting edge groove, **characterized in that** at least one sealing groove is formed in the intumescent strip (17), a seal (18) being inserted into the sealing groove.

2. A fire protection closure (1) according to claim 1, **characterized in that** the fire protection closure is overall profile-free.

3. A fire protection closure (1) according to claim 1 or 2, **characterized in that** at least one fixed element (8) made of at least one fire protection pane (7) is arranged above the glass door (6).

4. A fire protection closure (1) according to claim 3, **characterized in that** the lateral abutting edges of the fixed element (8) are inserted into a groove (13) formed in the reveal (3).

5. A fire protection closure (1) according to claim 3 or 4, **characterized in that** the upper abutting edge of the fixed element (8) is inserted into a groove (13) formed in the lintel (4).

6. A fire protection closure (1) according to claim 5, **characterized in that** a U-profile (14) made of metal, in particular made of steel, is inserted into the groove (13).

7. A fire protection closure (1) according to claim 5 or 6, **characterized in that** the fixed element (8) comprises a larger width than the clear width of the wall opening (2), wherein the depth of the groove (13) on at least one longitudinal side of the reveal (3) is chosen such that it corresponds at least to the difference between the width of the fixed element (8) and the clear width of the wall opening (2).

8. A fire protection closure (1) according to one of the preceding claims, **characterized in that** the glass door (5) is configured as swing door or as single- action door.

9. A fire protection closure (1) according to one of the preceding claims, **characterized in that** the glass door (5) only comprises one leaf, wherein the door leaf (6) is held via one or more hinges (9, 10) in a pivoting manner directly at the reveal (3), at the lintel (4), at the fixed element (8) and/or on the floor.

10. A fire protection closure (1) according to one of the claims 1 to 8, **characterized in that** the glass door (5) comprises two leaves, wherein both door leaves (6) are respectively held via one or more hinges (9, 10) in a pivoting manner directly at the reveal (3), at the lintel (4), at the fixed element (8) and/or on the floor.

11. A fire protection closure (1) according to one of the claims 1 to 10, **characterized in that** the edging compound (12) is offset inwards by at least 4 mm, preferably at least 15 mm, while forming the abutting edge groove.

12. A fire protection closure (1) according to one of the claims 1 to 11, **characterized in that** the abutting edge groove is formed at all abutting edges of the fire protection pane (7) of the door leaf (6).

13. A fire protection closure (1) according to one of the claims 1 to 12, **characterized in that** furthermore at least one sealing groove is formed between the intumescent strip (17) and the fireproof glass panes (7a, 7b), a seal (18) being inserted into the sealing groove.

14. A fire protection closure (1) according to one of the claims 1 to 13, **characterized in that** the seal (18) inserted into the sealing groove is a lip seal.

15. A fire protection closure (1) according to one of the claims 1 to 14, **characterized in that** the seal (18) comprises spring hooks, by means of which the seal (18) is held in the sealing groove.

16. A fire protection closure (1) according to one of the preceding claims, **characterized in that** on its longitudinal side opposite the reveal (3) the door leaf (6) comprises a lock case (29) with a lock latch (31), wherein the lock case (29) is in particular inserted into a recess (30) of the door leaf (6).

17. A fire protection closure (1) according to claim 16, **characterized in that** the glass door (5) comprises one leaf and that a snap-in locking device (33) corresponding to the lock latch (31) is provided at the reveal (3) facing the lock case (29) on the level of the lock case (29), wherein the snap-in locking device (33) is especially accommodated in a recess (34) of the reveal (3).

18. A fire protection closure (1) according to claim 16, **characterized in that** the glass door (5) comprises two leaves and that the second door leaf which is not provided with a lock case (29) comprises a stop case on its side facing the first door leaf (6), which stop case is mounted at the height of the lock case (29) and comprises a snap-in device corresponding to the lock latch (31), wherein the stop case is in particular inserted into a recess of the second door leaf.

19. A fire protection closure (1) according to one of the preceding claims, **characterized in that** the lower abutting edge of the door leaf (6) is provided with a bottom seal.

## Revendications

1. Clôture coupe-feu (1) pour empêcher le feu et la fumée de passer d'une pièce à une autre en cas d'incendie, dans lequel la clôture coupe-feu peut être insérée dans une ouverture de paroi (2) ayant une embrasure (3) et un linteau (4) et reliant les deux pièces, la clôture coupe-feu comprenant une porte en verre (5) avec au moins un vantail (6) sans profilé, le vantail (5) étant composé d'une vitre pare-feu (7) et étant retenu de manière pivotant dans au moins une direction, dans lequel au moins un côté longitudinal du vantail (6) peut être adjacent à l'embrasure (3) de l'ouverture de paroi (2) sans chambranle, dans lequel la vitre pare-feu (7) comprend deux plaques en verre résistantes au feu (7a, 7b) espacées parallèlement l'une de l'autre par moyen d'un joint périphérique (12), qui forme un bord de butée, l'espace enfermé par le joint périphérique (12) entre les plaques en verre (7a, 7b) résistantes au feu étant rempli d'un gel coupe-feu (7c) et le joint périphérique (12) de la vitre pare-feu (7) étant décalé vers l'intérieur à au moins un bord de butée en formant une rainure de bord de butée, dans lequel une bande intumescente (17) est insérée dans la rainure de bord de butée, **caractérisée en ce qu'**au moins une rainure de joint est formée dans la bande intumescente (17), un joint (18) étant inséré dans la rainure de joint.

2. Clôture coupe-feu (1) selon la revendication 1, **caractérisée en ce que** la clôture coupe-feu (1) est dans l'ensemble formée sans profilé.

3. Clôture coupe-feu (1) selon la revendication 1 ou la revendication 2, **caractérisée en ce qu'**au moins un élément fixe (8) formé par au moins une vitre pare-feu (7) est disposé au-dessus de la porte en verre (6).

4. Clôture coupe-feu (1) selon la revendication 3, **caractérisée en ce que** les bords de butée latéraux de l'élément fixe (8) sont insérés dans une rainure (13) formée dans l'embrasure (3).

5. Clôture coupe-feu (1) selon la revendication 3 ou la revendication 4, **caractérisée en ce que** le bord de butée supérieur de l'élément fixe (8) est inséré dans une rainure (13) formée dans le linteau (4).

6. Clôture coupe-feu (1) selon la revendication 5, **caractérisée en ce qu'**un profilé en forme de U (14) en métal, notamment en acier, est inséré dans la rainure (13).

7. Clôture coupe-feu (1) selon la revendication 5 ou la revendication 6, **caractérisée en ce que** l'élément fixe (8) comprend une largeur plus grande que la largeur libre de l'ouverture de paroi (2), dans lequel la profondeur de la rainure (13) sur au moins un côté longitudinal de l'embrasure (3) est choisie, de sorte qu'elle correspond au moins à la différence entre la largeur de l'élément fixe (8) et la largeur libre de l'ouverture de paroi (2).

8. Clôture coupe-feu (1) selon l'une des revendications précédentes, **caractérisée en ce que** la porte en verre (5) est configurée comme une porte battante ou une porte à butée.

9. Clôture coupe-feu (1) selon l'une des revendications précédentes, **caractérisée en ce que** la porte en verre (5) ne comprend qu'un vantail, le vantail (6) étant retenu via une ou plusieurs charnières (9, 10) de manière pivotant directement à l'embrasure (3), au linteau (4), à l'élément fixe (8) et/ou au sol.

10. Clôture coupe-feu (1) selon l'une des revendications 1 à 8, **caractérisée en ce que** la porte en verre (5) comprend deux vantaux, les deux vantaux (6) étant chacun retenu via une ou plusieurs charnières (9, 10) de manière pivotant directement à l'embrasure (3), au linteau (4), à l'élément fixe (8) et/ou au sol.

11. Clôture coupe-feu (1) selon l'une des revendications 1 à 10, **caractérisée en ce que** le joint périphérique (12) est décalé vers l'intérieur par au moins 4 mm, de préférence par au moins 15 mm, en formant la rainure de bord de butée.

12. Clôture coupe-feu (1) selon l'une des revendications 1 à 11, **caractérisée en ce que** la rainure de bord de butée est formée sur tous les bords de butée de la vitre pare-feu (7) du vantail (6).

13. Clôture coupe-feu (1) selon l'une des revendications 1 à 12, **caractérisée en ce qu'**en outre au moins une rainure de joint est formée entre la bande intumescente (17) et les plaques en verre (7a, 7b) résistantes au feu, un joint (18) étant inséré dans la rainure de joint.

14. Clôture coupe-feu (1) selon l'une des revendications 1 à 13, **caractérisée en ce que** le joint (18) inséré dans la rainure de joint est un joint à levre.

15. Clôture coupe-feu (1) selon l'une des revendications 1 à 14, **caractérisée en ce que** le joint (18) comprend des crochets élastiques, par moyen desquels le joint (18) est retenu dans la rainure de joint.

16. Clôture coupe-feu (1) selon l'une des revendications précédentes, **caractérisée en ce que** sur son côté longitudinal opposé à l'embrasure (3) le vantail comprend une boîte de serrure (29) avec un pêne de serrure (31), la boîte de serrure (29) étant notamment inséré dans un évidement (30) du vantail (6).

17. Clôture coupe-feu (1) selon la revendication 16, **caractérisée en ce que** la porte en verre (5) ne comprend qu'un vantail et qu'un dispositif d'encliquetage (33) correspondant au pêne de serrure (31) est prévu sur l'embrasure (3) faisant face à la boîte de serrure (29) au niveau de la boîte de serrure (29), le dispositif d'encliquetage (33) étant notamment logé dans un évidement (34) de l'embrasure (3).

18. Clôture coupe-feu (1) selon la revendication 16, **caractérisée en ce que** la porte en verre (5) comprend deux vantaux et que le deuxième vantail, qui n'est pas muni d'une boîte de serrure (29), comprend une boîte de butée sur son côté faisant face au premier vantail (6), la boîte de butée étant disposée au niveau de la boîte de serrure (29) et comprenant un dispositif d'encliquetage correspondant au pêne de serrure (31), la boîte de butée étant notamment insérée dans un évidement du deuxième vantail.

19. Clôture coupe-feu (1) selon l'une des revendications précédentes, **caractérisée en ce que** le bord de butée inférieur du vantail (6) est muni d'un joint de sol.
